Europäisches Patentamt

**European Patent Office**

**Office européen des brevets**

(11) Publication number: **0 139 153**
**A1**

(12) # EUROPEAN PATENT APPLICATION

(21) Application number: **84109897.3**

(22) Date of filing: **20.08.84**

(51) Int. Cl.⁴: **F 16 D 67/00**

(30) Priority: **04.10.83 US 538901**

(43) Date of publication of application:
**02.05.85 Bulletin 85/18**

(84) Designated Contracting States:
**AT CH DE FR GB IT LI NL SE**

(71) Applicant: **Conrad, Michael K.**
**8011 Sundance Lane**
**La Palma California 90623(US)**

(72) Inventor: **Conrad, Michael K.**
**8011 Sundance Lane**
**La Palma California 90623(US)**

(74) Representative: **Robert, Jean S.**
**51, route du Prieur**
**CH-1257 Landecy (Genève)(CH)**

(54) **Interactive force transmission.**

(57) An interactive force transmission that can be produced in a variety of modes. The most common mode would couple a planetary gear system (12) to a torque drive (10) with a hydraulic fluid intermediate substance (26). An outer counter-rotation device (11) and a reverse action is added. The reverse action is achieved by stopping a sun gear (38) which varies the ratio and rotation of the wheel gears (34-35) and the sun gears which results in the overturning of the output gear (32) and a reverse action. The interaction of forces from the thruster (25) through the hydraulic fluid (26) and the resisting loads in the receiver (28) result in a turning force on the receiver (28), which, in turn, furnishes variable speed into the planetary gear system (12) in such a manner as to produce a variable output force on the planetary gear system (12).

FIG. 1

APPLICANT:     MICHAEL K. CONRAD

TITLE:     INTERACTIVE FORCE TRANSMISSION

## BACKGROUND OF THE INVENTION

This is a Continuation in Part of application 435,760 for a similar invention filed October 21, 1982 and now abandoned.

Field of the Invention

This invention relates to transmissions and in particular those automatic transmissions that are compound and composed of additional planetary gear systems, couplings and/or torque convertor systems.

Description of the Prior Art

A search of the prior art in the field revealed hundreds of patents represented by U.S. Patents 3,398,603; 4,129,050; 4,125,037; 3,974,718; 4,191,070; 4,214,489; 4,299,996; 4,287,792; 3,752,013; 3,705,522; 3,511,113; 3,503,281; 2,974,543 and 3,893,350. None of these patents reveal the invention, for while they may contain the same elements of this invention, they do not couple them together in the same manner and they do not contain all the benefits of this system.

The outstanding advantage of this invention over the prior art is that constant variable speed can be obtained with gears and the speed is controlled by other elements within the transmission.

0139153

## SUMMARY OF THE INVENTION

In this invention a planetary gear system and a torque drive are coupled together. The main purpose of the torque drive is to provide a variable input to the gear system thus producing various speeds in the interactive force transmission. Inputs to the transmission are entered in two places. One is the planetary gear system and the other the torque drive.

In the torque drive a force is pitted against resisting loads the result being a torque drive output to supply a variable speed to the gear system. When the torque drive places a secondary input to the planetary gear system at the same speed as the other input, the input and output of the transmission are identical. When the resisting load forces the input from the torque drive to stop moving the output of the torque drive, the ratio of the gear train in the planetary gear system determines the output speed.

It will be seen to those skilled in the art that an infinite number of speeds can be obtained by introducing different speeds to the two planetary gear inputs. In that way the movement of the gears controls the output speed of the transmission.

An anti-counter rotational device may be added to the system in such a manner that the torque drive input cannot counter rotate. This counter-rotational device is to stop internal movement which would destroy the transmission output when the torque drive input is insufficient. The interactive force transmission can be used in many applications by modifying the torque drive for the required application and adding coupling, clutches and gears before and after the interactive force transmission. For example a motor vehicle application may be made by placing a coupling in front of the transmission to disconnect the engine when the vehicle is at a standstill. Placing additional gears before or after the transmission can install a reverse and overdrive. Additionally with proper selections of ratios and arrangements of the components a clutch and another type of reverse may be incorporated in the interactive force transmission.

It is an object of this invention to increase the efficiency of all component parts caused by utilizing the interactive forces between the input force and the resisting load to properly adjust the gear ratios.

Still another object of this invention is the use of a constant meshing gear system instead of belts or gears with external controls to change speeds.

A still further object of this invention is to produce a self-controlled internal mechanism without the need of externally controlled clutches, except for reverse, to activate the system.

- 4 -

0139153

## BRIEF DESCRIPTION OF THE DRAWINGS

FIGURE 1 is a cross-sectional view of a reactive force transmission.

FIGURE 2 is a section of Figure 1 through Line 2-2 depicting a planetary gear system and the rotational movement of the wheel gears.

FIGURE 3 is a cross-sectional view of an alternate planetary gear system.

FIGURE 4 is a section of Figure 3 through 4-4 depicting the planetary gear system input gear, wheel gears and their relative rotation within the alternate planetary gear system.

FIGURE 5 is a section of Figure 3 through 5-5 depicting the output gear, wheel gears and their relative rotation within the alternate planetary gear system.

FIGURE 6 is a cross-section of an optional planetary gear system which incorporates a reverse.

## DESCRIPTION OF THE PREFERRED EMBODIMENT

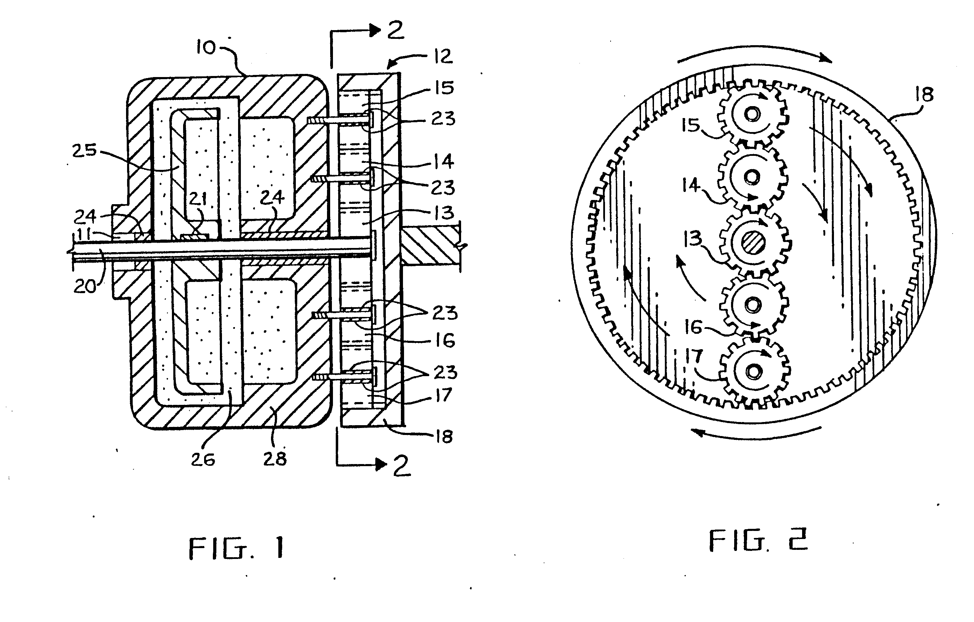

Turning now to Figure 1 a torque drive 10, a planetary gear system 12 and counter-rotational device 11 are depicted. Power input shaft 20 is connected to the sun gear 13 of the planetary gear system 12. Power is also applied to thruster 25 of the torque drive. Power is transmitted by the gear teeth from the sun gear 13 through the wheel gears 14, 15, 16, 17 to the output gear 18. The wheel gears 14, 15, 16, 17 are mounted on bearings 23 so that they may rotate freely and act as idler gears in the gear train. Wheel gears 16 and 17 are not essential to the transmission, but they are used for balance and to add strength to the planetary system 12. Bushing 24 supports the torque drive-on shaft 20 and allows the free movement between the torque drive and the planetary gear system.

When there is no input from the torque drive 10, the planetary gear system 12 becomes a standard gear train and the output is determined by the ratio within the gear train. The torque drive 10 through an interaction of input force and resistant loads rotates the wheel gears 14, 15, 16, 17 about the sun gear 13. When the wheel gears 14, 15, 16, 17 are rotated about the sun gear at the same speed and direction as the sun gear 13, the entire planetary gear system 12 is traveling at the same speed, producing a 1:1 ratio between the input and output of the invention. Any partial rotation of the wheel gears 14, 15, 16, 17 about the sun gear 13 moves that portion at a 1:1 ratio. The remaining portion is moved by the sun gears 13 movement of the gear train. Thus the output speeds are changed by the variance of the torque drive rotating wheel gears 14, 15, 16 17 about the sun gear 13.

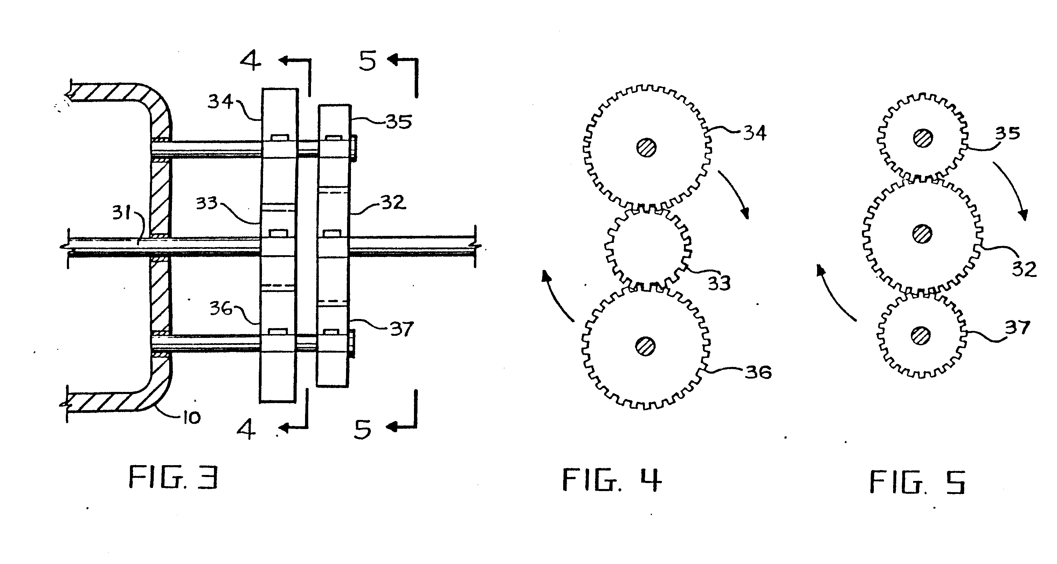

Figure 3 is an alternate mode of the invention. The same torque drive 10 is used and the drive shaft 31 is keyed to gear 33. Gears 34 and 36 are given a variable rotational input by the torque drive which produces a variable output on gear 32 which is transmitted through 35 and 37. This alternate planetary gear system 34, 33, 36, 35, 32 and 37 is used to achieve a larger gear ratio in a smaller space. The drive shaft 31 may be a direct input from the power source or a variable input from the torque drive.

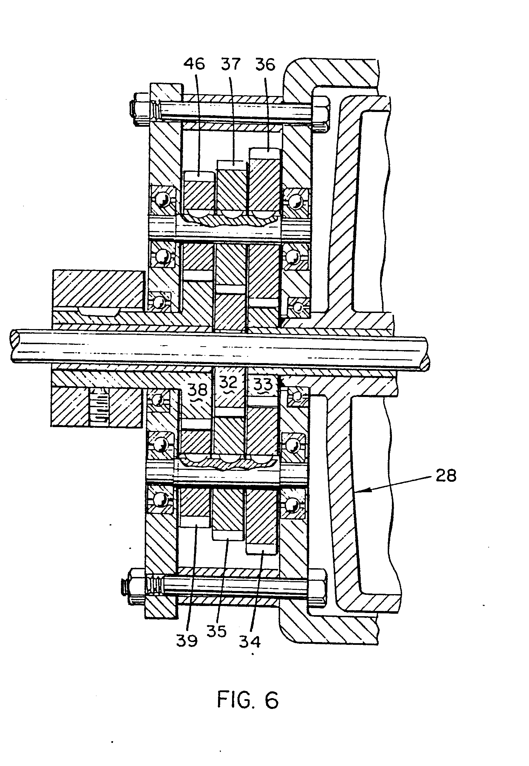

Figure 6 is an alternate mode of the invention in which a direct power input is made to the rotation of gears 34, 35, 36, 37, 39 and 40. The variable input is transmitted from the torque drive to the gear 33. The output is transmitted through gear 32 to output shaft 41. Gear 38, 39 and 40 are placed in the system for a reverse action which is described below. In the Figure 6 system for forward drive a variable input is transmitted to gear 33 which produces a variable output on gear 32 by the rotation of gears 34, 35, 36 and 37. Gears 35 and 37 rotate less than required by the system and drag gear 32 through the balance of its rotation. When gear 38 is made stationary, the overturning of gears 35, 37, 39 and 40 causes the reversing action on gear 32. Gear 32 is no longer dragged through its rotation, it is rather overturned to the reverse direction causing a reverse output on shaft 41. The removal of the counter-rotation device 11 and proper rationing of the gears 32 - 40 stops the transfer of motion through the output gear 32 until the torque drive (not shown) stops or positively moves the input to the sun gear. Torque drive 10, Figure 1 may be made by modifying hydraulic, electro-magnetic, friction and pellet type couplings and clutches. A variable speed motor or a differential gear arrangement with two ratioed inputs can also be used as a torque drive. The arrangement of the components to the shafts and housing may vary to fit the coupling modification and the adaption to the planetary gear system 12. The thruster 25 transmits forces to the receiver 28 through the intermediate substance or force 26. The intermediate force or substance may be oil, pellets, friction devices or magnetic forces. As there is no direct linkage between the thruster 25 and the receiver 28 these components may travel at different speeds. The speed of the receiver 28 is determined by the efficiency of the transfer of force through the intermediate substance 26 and the resisting load (not shown) which is transmitted from the planetary gear system 12. The efficiency of the transfer of force is regulated in such a manner that only a specific amount of torque can be transferred. If the work load is greater than the force provided by thruster 25, the intermediate substance 26 will allow slippage. However, the thruster 25 continues to furnish the specific torque so when the load decreases the slippage decreases and the receiver 28 turns a proportionate amount.

When the resisting load slows the torque drive 10 this slows the variable input which changes the gear ratio. When the gear ratio is lowered, the resisting loads are decreased due to the mechanical advantage of the gears until the speed of receiver 28 is matched to the required working ratio. When the interactive force transmission is used with some equipment in an acceleration mode such as a motor vehicle, the specific torque in the torque drive may be varied during the acceleration to increase the efficiency of the motor vehicle. Adjustments can be accomplished by increasing or decreasing the distance between the thruster 25 and the receiver 28 and varying the amount of pressure of the intermediate substance 26. In the case of hydraulic couplings the angle of the vanes and the proportionate size of the thruster and receiver may also be used to adjust the specific force. In order to reverse the variable inputs from the wheel gears to the sun gears (as depicted between Figures 1, 3 and 6) the position of the receiver and the thruster are reversed within the torque drive.

The control of adjustments during acceleration may be accomplished by the use of centrifical force and/or regulated pressure. As the torque drive allows some slippage, it is desirable to lock the torque drive to the input shaft when 100% efficiency is required, Such a device may be added with the other control devices. Multiple compartments or combinations of torque drives can add more control options to the operation of the transmission. Acceleration rates can be changed by using different specific torque in each compartment. The addition of a compartment would change the acceleration rate. This would be advantageous for a motor vehicle where one may want one compartment for a powerful acceleration but by adding a second compartment one could obtain a gas saving acceleration rate. The efficiency of the transfer of force from the thruster to the receiver can be varied by placing a moveable barrier between them. This barrier may be moveable to change the transfer torque.

Industrial and machine tool applications would involve selecting the speed by adjusting the specific force to produce the desired speed. Both input force and particular load would be constant. The input of forces to the planetary gear system can be reversed.

It can be seen that many variations of the present invention are possible without varying from the scope and spirit of the attached claims.

CLAIMS

I CLAIM:

1. An interactive force transmission composed in combination of:

a planetary gear means;

a torque drive means;

an intermediate substance means within the torque drive means;

an anti-counter rotation device; and,

an interactive force means to produce a variable speed.

2. A planetary gear means as described in Claim 1 in which the wheel gears are rotated about the sun gear and together they produce a force on the output gear.

3. A planetary gear means as described in Claim 1 in which the wheel gear rotation about the sun gear may be varied by the torque drive in such a manner as to produce a variable speed in the output gear.

4. A planetary gear means as described in Claim 1 in which the rotation of the sun gear is varied by the torque drive to produce a variable speed in the output gear.

5. A planetary gear means as described in Claim 1 in which when the wheel gears are rotated the same speed as the sun gear the output gear will also travel at that speed.

6. A planetary gear means as described in Claim 1 in which the sun gear is rotated the same speed as the wheel gears and the output gear will travel at that speed.

7. A planetary gear means as described in Claim 1 in which the ratios and rotation of the wheel gears and sun gears causes an overturning movement in the output gear resulting in a reverse action.

8. A torque drive means as described in Claim 1 in which the distance between the thruster and receiver is varied to produce the

- 10 -

0139153

desired torque transfer.

9. A torque drive means as described in Claim 1 in which a torque drive or driver has more than one compartment to allow different specific amounts of torque for different applications or acceleration rates.

10. A torque drive means as described in Claim 1 in which the proportional size relationship between the thruster and receiver is varied to produce the desired torque transfer.

11. A torque drive means like that described in Claim 1 in which a variable speed motor is used.

12. A torque drive means like that described in Claim 1 which receives two ratioed inputs to the opposing gears of a differential gear arrangement and their interaction is placed on the traveling gear which becomes the torque drive output.

13. A torque drive means like that described in Claim 1 in which the vane angles of the thruster and receiver may be varied to increase or decrease the force transfer efficiency.

14. A torque drive means as described in Claim 1 in which the efficiency of the force transfer in the intermediate substance may be controlled during acceleration by the use of centrifical force or hydraulic pressure.

15. A torque drive means as described in Claim 1 which includes a locking device which may be used to lock the torque drive to the power input to eliminate slippage when the exact 1;1 ratio is required.

16. A torque drive means as in Claim 1 which contains a barrier between the thruster and receiver to control the efficiency of the transfer of force.

17. An intermediate substance means like that described in Claim 1 in which the intermediate substance may be a friction coupling.

18. An intermediate substance means as described in Claim 1 in which the intermediate substance is a fluid.

19. An intermediate substance means as described in Claim 1 in which the intermediate substance may be pellets.

20. An intermediate substance means as described in Claim 1 in which the intermediate substance may be an electromagnetic force.

21. An intermediate substance means as described in Claim 1 in which the efficiency of the transfer of force by the intermediate substance may be varied by the amount of substance present.

22. An intermediate substance means as described in Claim 1 in which the efficiency of the transfer of force may be varied by changing the pressure.

23. An interactive force means like that described in Claim 1 in which it is the interaction of the input force transmitted from the thruster through the intermediate substance and the resisting loads in the receiver that result in the turning force on the receiver.

0139153

FIG. 2

FIG. 1

0139153

FIG. 3

FIG. 4

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 378 085 (J. JANDASEK)<br><br>* Document en entier * | 1-6,9 10,14 15,18 23 | F 16 D 67/00 |
| X | FR-A-1 197 199 (SOCIETE DE MECANIQUE ET DES BREVETS BUCCIALI)<br>* complete document * | 1-6,18 ,23 | |
| X | US-A-2 593 184 (E.G. REED)<br><br>* Complete document * | 1,7,8 14,18 | |
| A | FR-A-1 087 405 (J.P.C. FISCHER)<br><br><br><br>* Complete document * | 1,3-6 11-13 18,20 21,23 | TECHNICAL FIELDS SEARCHED (Int. Cl.4)<br><br>F 16 D 67/00<br>F 16 H 47/00 |
| A | FR-A-2 085 106 (RANZI LEGNANO)<br>* Page 1, lines 15-20 * | 19 | |
| A | US-A-2 385 059 (H. BUTHE) | | |
| A | FR-A-1 596 168 (F.G. AUVRAY) | | |

The present search report has been drawn up for all claims

| Place of search<br>BERLIN | Date of completion of the search<br>12-12-1984 | Examiner<br>LEMBLE Y.A.F.M. |
|---|---|---|